# EUROPÄISCHE PATENTSCHRIFT

(11) **EP 0 719 731 B1**
(45) Veröffentlichungstag und Bekanntmachung des Hinweises auf die Patenterteilung: **18.03.1998**
(21) Anmeldenummer: 95119764.9
(22) Anmeldetag: 14.12.1995
(51) Int. Cl.: C01G 49/08, C09C 1/24

(54) **Verfahren zur thermischen Behandlung von Eisenoxiden in einer zirkulierenden Wirbelschicht**
Process for the thermal treatment of iron oxides in a circulating fluid bed
Procédé de traitement thermique d'oxydes de fer dans le lit fluidisé circulant

(30) Priorität: 27.12.1994 DE 4446873; 14.08.1995 DE 19529864
(43) Veröffentlichungstag der Anmeldung: 03.07.1996
(73) Patentinhaber: BAYER AG, 51368 Leverkusen (DE)
(72) Erfinder: Krekel, Jörg, Dr., D-45136 Essen (DE); Köhler, Berndt-Ullrich, Dr., D-47800 Krefeld (DE); Brunn, Horst, Dr., D-40668 Meerbusch (DE)

(56) Entgegenhaltungen:
- EP-A- 0 249 843
- EP-A- 0 396 975
- EP-A- 0 419 964
- DE-A- 2 524 540

## Beschreibung

Die vorliegende Erfindung betrifft ein Verfahren zur Herstellung von Eisenoxidbraun-, -rot- und -schwarzpigmenten sowie deren Verwendung.

Eisenoxidpigmente bestehen aus Oxiden des dreiwertigen oder zwei- und dreiwertigen Eisens mit Maghämit-, Hämatit- oder Magnetitstruktur. Ihre Herstellung erfolgt entweder nach dem Ein- oder Zweistufen-Fällungsverfahren aus Eisen (II)-Salzlösungen, wie z.B. in DE-A 2 617 568 beschrieben, oder nach dem Lauxverfahren durch Reduktion von Nitrobenzol mit metallischem Eisen (Ullmanns Encyklopädie der technischen Chemie, 4. Aufl., Band 18, Seite 603, Verlag Chemie, Weinheim 1979 und DE-C 518 929). Die Stabilisierung (gegen Oxidation) von pulverförmigem Eisenoxidschwarz kann durch eine chemische Nachbehandlung, wie sie in DE-C 2 625 106 beschrieben ist, erfolgen. Da diese zwar das Pigment stabilisiert, jedoch die Farbeigenschaften eher verschlechtert und die Ökologie des Pigmentes nicht positiv beeinflußt, wurde ein Verfahren, wie in DE-A 3 620 333 beschrieben, zur thermischen Behandlung von Schwarzpigmenten im Drehrohrofen unter inerten Bedingungen entwickelt. Eine weitere Verbesserung dieses Verfahrens, wobei die Temperung nicht inert, sondern unter leicht oxidierenden Bedingungen durchgeführt wird, ist in DE-A 3 910 783 beschrieben.

Auch die in DE-A 3 518 093 beschriebene, wäßrige Behandlung von im wesentlichen aus Eisen und Sauerstoff bestehenden Pasten aus den Abwässern der Bereiche Waschung, Filtration, fest/flüssig-Trennung sowie auch Fehlchargen usw. aus der Eisenoxidpigmentproduktion (im folgenden als Abwasserpasten bezeichnet) führt zu einer deutlichen Verbesserung der Qualität des Endproduktes.

Üblicherweise werden die Eisenoxidpigmente, die im Laufe der Herstellung als Zwischenprodukte in wäßriger Phase in Form von Filterkuchen anfallen, nach dem Trocknen je nach Einsatz mehr oder weniger stark gemahlen.

Obschon Eisenoxidpigmente in der Regel in dieser Pulverform eingesetzt werden, sind sie doch mit Nachteilen behaftet, da sie zum Stauben neigen und nur schlecht dosierbar sind.

Aus diesem Grund wird in der DE-A 3 619 363 vorgeschlagen, für das Einfärben von Beton Pigmentgranulate zu verwenden, denen Dispergierhilfsmittel zugesetzt wurden.

In DE-A 3 910 779 wird vorgeschlagen, die Granulation von Eisenoxidschwarzpigment ohne Zusatz von Bindemittel durchzuführen und die nötige Festigkeit der Granalien über eine Temperung bei höherer Temperatur im Drehrohrofen (400-800°C) zu erreichen. Hierbei werden die Farbeigenschaften, die Stabilität sowie auch die Ökologie der Pigmente verbessert.

Das oben beschriebene Drehrohrverfahren weist mehrere Vor- sowie Nachteile auf. Zu den Vorteilen gehören ein einfacher Feststofftransport, problemlose Mischung unterschiedlicher Produktzustände, bewährte Technik und vor allem eine gut definierbare Mindestverweilzeit.

Als Nachteil ist anzusehen, daß die Temperung im Drehrohrofen sehr aufwendig in den Betriebskosten ist, da zur Herstellung von größeren Pigmentmengen (5-15 t/h) ein sehr großes Aggregat notwendig ist, welches einen hohen Wärmeverlust aufweist. Wegen der bewegten Teile ist eine Abdichtung, etwa bei inerter oder gar reduzierender Fahrweise, sehr aufwendig. Die kompakte, bodengängige Schüttung im Drehrohr bedingt eine breite Temperatur- sowie auch Atmosphärenverteilung der einzelnen Produktkörner. Dies führt zu ungleichmäßigen Produkteigenschaften und zu Schwierigkeiten bei der Einstellung der Atmosphäre, da wegen des schlechten Gasaustausches kein Gleichgewicht zwischen Produkt und Atmosphäre eingestellt wird. Hinzu kommt ein relativ großer Austrag an Feststoffanteil, welcher in einem aufwendigen Staubabscheider (EGR) abgeschieden werden muß.

In EP-A 419 964 wird ein Verfahren zur Herstellung von Eisenoxidrot- und Eisenoxidbraun-Mikrogranulaten beschrieben. Wäßrige Eisenoxidgelb- und Eisenoxidschwarz-Suspensionen werden einer Sprühgranuliertrocknung zugeführt, und die erhaltenen Mikrogranulate mit Durchmessern von 20 bis 600 µm werden bei Temperaturen zwischen 200 und 1 000°C behandelt.

Weiterhin sind die beschriebenen thermischen Nachbehandlungen sehr eingeschränkt anwendbar: In der Regel sind sie nur für die Temperung von nahezu stöchiometrischen Magnetiten konzipiert. So werden weder Abwasserpasten (ein oft undefiniertes und variables Gemisch verschiedener Eisenoxid- und Eisenoxyhydroxidphasen mit Fremdelement- (Mn-, Si-, S-, Cl-, C- usw.) Mengen von bis zu 10 Gew.-%, welches bei der Aufarbeitung, Waschung oder sonstigen Verfahrensschritten entsteht) eingesetzt, noch wird die Herstellung von Braunpigmenten (Maghämit) oder Rotpigmenten (Hämatit) aus diesen Ausgangsstoffen berücksichtigt.

Um die Nachteile der Drehrohrtechnik ganz oder teilweise zu umgehen, sind thermische Behandlungen in anderen Aggregaten denkbar. So könnte z.B. eine stationäre Wirbelschicht eingesetzt werden, die große Vorteile hinsichtlich Wirtschaftlichkeit sowie Vergleichmäßigung der thermischen und atmosphärischen Belastung der Einzelteilchen verspricht. Dieser Weg führt allerdings bereits im Vorfeld zum Scheitern, da wegen der sehr breiten Teilchengrößenverteilung des Eingangsagglomerates die Verwirbelung der gröberen Anteile zum Austrag einer wesentlichen Menge des Feinanteils führt (siehe Vergleichsbeispiel 4).

Beim Einsatz einer zirkulierenden Wirbelschicht, wie in der DE-A 2 524 540 zur Reduktion von Eisenerz zu Magnetit beschrieben, benötigt man feste, kristalline Partikel in der Größenordnung von 20-300 µm mit hinreichend hoher Abriebstabilität. Feinanteil (< 20 µm) wird infolge der hohen Wirbelgeschwindigkeiten mit dem Abgas ausgetragen. Pigmente mit Partikelgrößen < 10 µm sind daher für den Einsatz ungeeignet. Pigment-Granulate, wie in EP-A 396 975 beschrieben, führen infolge der notwendigen hohen Bindemittel-Anteile zu unerwünschten Nebeneffekten, wie Sintern, Teilreduktion etc., die sich alle negativ auf die Farbeigenschaften der Pigmente auswirken.

Aufgabe der Erfindung war es daher, aus den Ausgangsstoffen - Schwarzpaste, Gelbpaste sowie gemischtvalente Abwasserpaste - stabile (im Sinne der Lager-, Transport- und Bewitterungsstabilität), ökologisch und farbmetrisch verbesserte, universell einsetzbare Eisenoxidschwarz-, -braun- und -rotpigmente zur Verfügung zu stellen, die die beschriebenen Nachteile nicht aufweisen, sowie ein ökonomisches Verfahren, mit dem diese Eisenoxidpigmente zugänglich sind.

Überraschenderweise wurde nun gefunden, daß die Aufgabe zur vollen Befriedigung gelöst werden kann, wenn im wesentlichen aus Eisen (II)-, Eisen (III)- oder aus gemischtvalenten Eisen (II, III)-oxiden, -hydroxiden oder -oxyhydroxiden bestehende Verbindungen unter geeigneten Bedingungen in einer zirkulierenden Wirbelschicht behandelt werden.

Gegenstand der Erfindung ist ein Verfahren zur Herstellung von Eisenoxidpigmenten aus der Gruppe (alpha-, gamma-) Fe₂O₃ und Fe₃O₄ aus entsprechenden Ausgangssuspensionen, deren Primärteilchen einen mittleren Durchmesser von ≤ 10 µm aufweisen und die durch
a) Umsetzung von Eisensalzlösungen mit alkalischen Verbindungen und Oxidation (Fällverfahren),
b) Oxidation von metallischem Eisen mit sauerstoffhaltigen Verbindungen (Pennimanverfahren),
c) Oxidation mit Nitrobenzol (Nitrobenzolreduktionsverfahren),
d) Abröstung von Eisensalzen (Coperasverfahren) mit nachfolgender Anmaischung in Wasser oder
e) Abtrennung und Aufarbeitung von im wesentlichen aus Eisen/Eisenverbindungen und Sauerstoff bestehenden Nebenprodukten oder Abfällen (Abwasserpasten) hergestellt werden,
gegebenenfalls Waschung und anschließender thermischer Behandlung, welches dadurch gekennzeichnet ist, daß das aus den Verfahren a) bis e) erhaltene Material ohne zusätzliche Bindemittel auf eine mittlere Teilchengröße von 0,05 bis 10 mm agglomeriert wird und anschließend dieses agglomerierte Material in einem beheizten Apparat thermisch behandelt wird, in dem das Material durch ein von unten nach oben gerichtetes Gasgemisch derart aufgewirbelt wird, daß eine Gas-Feststoff-Strömung gebildet wird (Wirbelschicht), das gebildete Gas-Feststoff-Gemisch von unten nach oben durch den Apparat strömt und in einem zweiten, nachgeschalteten Apparat, z.B. in einem Zyklon, in Gas- und Feststoffkomponenten getrennt wird, wobei ein Teil des Feststoffstroms entnommen wird und das verbleibende Material in den beheizten Apparat zurückgeführt wird (zirkulierende Wirbelschicht).

Bevorzugt wird ein Teil des Gasgemisches, gegebenenfalls nach weiterer Behandlung (z.B. Filtration, Reinigung usw.), zurückgeführt.

Ein geeignetes Agglomerat wird vorzugsweise durch Verdüsung oder Zerstäubung, beispielsweise in einem Sprüh- oder Venturitrockner, mit Restfeuchten < 18 Gew.-% erzeugt.

Die Agglomeration kann auch über Aufbaugranulation unter Zusatz von Wasser, über Kompaktierverfahren oder über beide Verfahren, gegebenenfalls unter Einsatz von flüssigem Brennmaterial (z.B. Paraffin, Heizöl) durchgeführt werden.

Bevorzugt wird ein Agglomerat mit einer mittleren Teilchengröße von 0,1 bis 1 mm in die zirkulierende Wirbelschicht eingetragen.

Die mittlere Teilchengröße kann beispielsweise über Streulichtmessungen, Zentrifugenabscheidung oder Siebanalysen bestimmt werden.

Vorteilhaft wird das Gas-Feststoff-Verhältnis im beheizten Apparat auf 100 bis 1 300 Nm³/t Pigment eingestellt.

Die Leerrohrgasgeschwindigkeit im beheizten Apparat wird bevorzugt auf zwischen 0,5 und 6m/s eingestellt.

Eine durchschnittliche Verweilzeit des Feststoffes im System von vorzugsweise zwischen 5 und 40 Minuten führt zu einer sehr ökonomischen Herstellung von Produkten mit akzeptablen Eigenschaften.

Die mittlere Mindestverweilzeit des Feststoffes im System beträgt bevorzugt mehr als 5 Minuten.

Da die breite Verweilzeitverteilung gekoppelt mit den im allgemeinen sehr kurzen Zirkulationszeiten den Austrag gewisser Produktmengen nach sehr kurzer Verweilzeit bedingt, kann das System vorteilhaft so modifiziert werden, daß direkt am Austrag eine Stauzone oder Austragsschnecke installiert wird, die die nötige Mindestverweilzeit unter geeigneten thermischen und/oder atmosphärischen Bedingungen im Gesamtsystem gewährt.

Sollen verschiedene Teilschritte am agglomerierten Material durchgeführt werden und können diese sinnvoll aufgetrennt werden (z.B. Agglomeration, Trocknung, thermische Behandlung), so können vorteilhaft zwei oder mehr beheizte Apparate (zirkulierende Wirbelschichten) in Reihe eingesetzt werden.

Die beheizten Apparate (zirkulierende Wirbel schichten) können direkt oder indirekt mit geeignetem Brennstoff oder elektrisch beheizt werden.

Die Herstellung von Hämatit oder Maghämit aus Goethit, Lepidokrokit, Magnetit oder im wesentlichen aus Eisen und Sauerstoff bestehenden Ausgangsstoffen, wie z.B. Abfall-, Abwasser- oder Rückstandspasten, erfolgt bevorzugt unter oxidierenden Bedingungen, wobei die Sauerstoffmenge im Abgas, vorzugsweise über 0,03 Mol Sauerstoff pro Mol durchgesetztem Eisen betragen sollte.

Zur Herstellung eines Rotpigmentes (Hämatit) kann die thermische Behandlung vorteilhaft bei 700 bis 950°C durchgeführt werden, während die Herstellung eines Braunpigmentes (Maghämit) bevorzugt bei 350 bis 600°C durchgeführt wird.

Zur Herstellung von Schwarzpigment (Magnetit) aus Goethit, Lepidokrokit, Magnetit oder im wesentlichen aus Eisen und Sauerstoff bestehenden Ausgangsstoffen, wie z.B. Abfall-, Abwasser- oder Rückstandspasten, wird die thermische Behandlung bevorzugt unter leicht oxidierenden, inerten oder reduzierenden Bedingungen durchgeführt, wobei die Sauerstoffmenge im Abgas vorzugsweise zwischen 0,0001 und 0,026 Mol Sauerstoff pro Mol durchgesetztem Eisen betragen sollte.

Bei Verfahren unter reduzierenden Bedingungen werden als Reduktionsmittel bevorzugt flüssige oder gasförmige Kohlenwasserstoffe, wie Öle oder Erdgas, Steinkohle, Braunkohle, Aktivkohle oder Wasserstoff eingesetzt.

Bei der Herstellung von Magnetiten wird die thermische Behandlung bevorzugt bei 350 bis 850°C, besonders bevorzugt bei 600 bis 850°C durchgeführt.

Wird unter leicht oxidierenden oder oxidierenden Bedingungen gearbeitet, so werden bevorzugt sauerstoffhaltige Gase als Oxidationsmittel eingesetzt.

Die Pigmente, die nach dem oben beschriebenen, erfindungsgemäßen Verfahren durch Agglomeration und thermische Nachbehandlung in einer zirkulierenden Wirbelschicht hergestellt werden und mittlere Teilchengrößen zwischen 0,05 und 10 mm, vorzugsweise zwischen 0,1 und 1 mm, aufweisen, besitzen den großen Vorteil, daß sie ohne weitere Behandlungsschritte, wie Mahlen etc., direkt zur Einfärbung von anorganischen oder organischen Dispersionen oder Baustoffen eingesetzt werden können. Die nach dem erfindungsgemäßen Verfahren hergestellten Produkte können, falls gewünscht oder erforderlich, jedoch auch in einem nachfolgenden Schritt aufgemahlen werden und dann bei der Einfärbung von Dispersionen oder Baustoffen eingesetzt werden.

Die Erfindung soll anhand der nachfolgenden Beispiele näher erläutert werden.

Die in den Beispielen angegebenen Daten wurden durch folgende Bestimmungsmethoden ermittelt:
- Farbmetrische Bestimmung der Farbabstände nach DIN 6174 (CIELAB-Werte) im Schwerspat.
- Farbstärke nach DIN 55 986; Weißausmischung mit der fünffachen Gewichtsmenge des TiO₂-Pigments Bayertitan R-KB 2; Bindemittel: Alkyldal L 64-Lack, beides Handelsprodukte der Bayer AG; Gleichstellungskriterium = Helligkeit.
- Oxidationsstabilität (IMCO-Prüfung): 1 l Produkt wird in einen luftdurchlässigen Drahtnetzkubus aus Phosphorbronze mit 10 cm Seitenlänge gefüllt; der Kubus wird in die Mitte eines Labor-Ofens mit innerer Luftzirkulation gestellt, auf Prüftemperatur geheizt und 24 h bei dieser Temperatur gehalten. Tritt im Inneren der Probe eine Temperatur über 200°C auf so ist die Probe bei der gewählten Prüftemperatur nicht stabil.
- Dispergierbarkeit: Zu einer leicht angefeuchteten Betondachsteinmischung werden 3 Gew.-% Pigment, bezogen auf Zementanteil, gegeben, 1 Minute in einem Mischer gemischt, 10 cm x 5 cm x 2 cm Steine bei einem Druck von 10 bar gepreßt und diese bei 35°C und 90 % relativer Luftfeuchte 24 h ausgehärtet. Die Farbstärke wird nun mit der eines gleichbehandelten Standards verglichen, wobei das Gleichstellungskriterium die Helligkeit ist.
- Festigkeit: 100 g Pigment werden in einem rotierenden Gefäß, welches mit Schikanen versehen ist, 5 Minuten unter einem Luftstrom von 20 l/min beansprucht. Die Luft wird durch einen Filter abgeführt, die auf dem Filter verbleibende Feststoffmenge ausgewogen. Diese Prozedur wird 5 Mal wiederholt, die einzelnen sowie die gesamte Pigmentmenge notiert.
- Teilchengrößenverteilung (TGV): Das Pigment wird bei einer Konzentration von ca. 2 g/l in destilliertem Wasser angerührt und ohne Dispergienung unter Einsatz einer 300er-Linse im Malvern Mastersizer vermessen. Angegeben wird der D[4,3]-Wert (Mittelwert).

### Beispiele

### Vergleichsbeispiel 1

Gewaschene Eisenoxidschwarzpasten mit Feststoffgehalten von 40 Gew.-% bis 70 Gew.-% wurden als Ausgangsstoff eingesetzt. Mehrere dieser Suspensionen wurden durch Sprühtrocknung agglomeriert. Die Gaseintrittstemperaturen betrugen zwischen 400 und 530°C, die Austrittstemperatur wurde so eingestellt, daß Restfeuchten von 1 % bis 8 % erhalten wurden. Hierbei wurden Austrittstemperaturen von 80 bis 140°C gemessen.

Die frisch hergestellten Produkte wurden den üblichen Prüfungen der Farbwerte (CIELAB-System), Teilchengrößenverteilung (TGV/Streulichtmessung, Siebmessung), Festigkeit (Dustmeter mit Zusatzschikanen), Dispergierbarkeit (Farbstärkeentwicklung in einer Betondachsteinmischung), Oxidationsstabilität (nach der IMCO-Methode) und des Fe³⁺/Fe²⁺-Verhältnisses unterzogen. Die gemessenen Werte sind den Tabellen 1 und 2 zu entnehmen.

### Vergleichsbeispiel 2

Gewaschene Abwasserpasten mit einem Feststoffgehalt von 50 Gew.-% wurden als Ausgangsstoff eingesetzt. Diese Suspensionen wurden ohne Bindemittel durch Sprühtrocknung agglomeriert. Die Gaseintrittstemperaturen betrugen zwischen 410 und 520°C, die Austrittstemperatur wurde so eingestellt, daß Restfeuchten von 1 % bis 8 % erhalten wurden. Hierbei wurden Austrittstemperaturen von 80 bis 120°C gemessen. In einem weiteren Versuch wurde durch Verringerung des Feststoffgehaltes in der Ausgangspaste auf 40 Gew.-% und Erhöhung der Drehzahl der Sprühscheibe, ein Produkt (2 b) hergestellt, welches eine deutlich geringere mittlere Teilchengröße aufweist.

Die Produkteigenschaften wurden wie im Beispiel 1 beschrieben ermittelt und sind den Tabellen 1 und 2 zu entnehmen.

### Vergleichsbeispiel 3

Sprühgetrocknete Pigmente wurden nach dem in Beispiel 1 beschriebenen Verfahren hergestellt und anschließend während ca. 30 bis 60 Minuten in einem indirekt beheizten Drehrohrofen bei Temperaturen zwischen 650 und 800°C unter inerter (N₂) bzw. leicht oxidierender (N₂/Luft) Atmosphäre getempert. Weiterhin wurden die zugeführten Gase im Gleich- sowie im Gegenstrom bezüglich der Produktfortbewegungsrichtung durchgesetzt. Hierbei wurde gefunden, daß bei der Gleichstromfahrweise möglicherweise vorhandene organische Reste nahezu vollständig verbrannt/zersetzt werden, wobei sich die Produkteigenschaften allerdings gegenüber der Gegenstromfahrweise nicht wesentlich ändern.

Die Produkteigenschaften wurden wie in Beispiel 1 beschrieben ermittelt und sind den Tabellen 1 und 2 zu entnehmen.

### Vergleichsbeispiel 4

Sprühgetrocknete Pigmente wurden nach dem in Beispiel 1 beschriebenen Verfahren hergestellt und anschließend während ca. 30 bis 60 Minuten in einem stationären Wirbelschichtreaktor bei einer Temperatur von 800°C unter leicht oxidierender (N₂/Luft) Atmosphäre getempert. Hierbei zeigte sich bereits bei den ersten Versuchen, daß bei der vorliegenden, breiten Teilchengrößenverteilung (siehe Tabelle 3) unter Bedingungen, die eine Verwirbelung auch der größeren Aggregate erlaubt, ca. 45 % des Produktes aus dem Reaktor ausgetragen werden. Somit erwies sich dieses Aggregat bereits im Vorfeld als ungeeignet.

### Beispiel 5

Das in Vergleichsbeispiel 1 beschriebene, sprühgetrocknete Material wurde in einer elektrisch beheizten zirkulierenden Wirbelschicht mit 200 mm Durchmesser und 6000 mm Höhe unter verschiedenen Temperatur- und Atmosphären-Bedingungen bei einer Verweilzeit von ca. 30 Minuten behandelt. Die Wirbelbettfüllung betrug 10 kg, der spezifische Produktdurchsatz 20 kg/h und die Gesamtgasbelastung etwa 25 Nm³/h, welche unter den gegebenen Bedingungen eine Gasgeschwindigkeit von ca. 1 m/s ergibt. Die relevanten Produkteigenschaften sind den Tabellen 1 und 2 zu entnehmen.

Wie aus den in den Tabellen aufgeführten Eigenschaften ersichtlich, ist es durchaus möglich, im gleichen Aggregat unter geeigneten Bedingungen aus ein und demselben Ausgangsstoff sehr gute Rot-, Schwarz- und Braunpigmente herzustellen.

### Beispiel 6

Das in Beispiel 5 erzeugte, stöchiometrische Rotpigment (5 a) wurde unter den in Beispiel 5 beschriebenen Bedingungen bei 750°C und unter Zugabe von 1 Nm³/h Luft und 5 Gew.-% Heizöl, bezogen auf die eingesetzte Pigmentmenge, welche in der unteren Zone des Wirbelschichtreaktors eingespritzt wurde, behandelt. Hierbei zeigte sich, daß es auch möglich ist, ein hochgetempertes, stöchiometrisches Rotpigment zu einem guten Schwarzpigment zu reduzieren.

Die relevanten Produkteigenschaften sind den Tabellen 1 und 2 zu entnehmen.

### Beispiel 7

Die in Vergleichsbeispiel 2 beschriebene, sprühgetrocknete Abwasserpaste wurde unter den in Beispiel 5 beschriebenen Bedingungen bei 750°C und verschiedenen Luftmengen behandelt. Zusätzlich wurde bei einigen Versuchen 1,75 % Heizöl, bezogen auf die Pigmentmenge, im unteren Bereich des Wirbelbettreaktors eingespritzt. Wie aus den in den Tabellen 1 und 2 aufgezeigten Produkteigenschaf ten ersichtlich können unter optimalen Bedingungen hervorragende Produkte, welche teilweise sogar bessere Eigenschaften als einige Standardvergleichsprodukte aufweisen, aus der Abwasserpaste hergestellt werden.

### Beispiel 8

Die in Vergleichsbeispiel 2 beschriebene, feinteilige, sprühgetrocknete Abwasserpaste wurde unter den in Beispiel 5 beschriebenen Bedingungen bei 825°C und einer Luftmenge von 24 (wie Beispiel 5 e) behandelt. Die geringe Durchschnittsteilchengröße (0,047 mm) führte zu einem stark erhöhten, nicht vorgesehenen Austrag des Feinanteils (10,6 %), welcher in einem Filter abgeschieden wurde. In allen anderen beschriebenen Versuchen wurden <0,4 % ausgetragen.

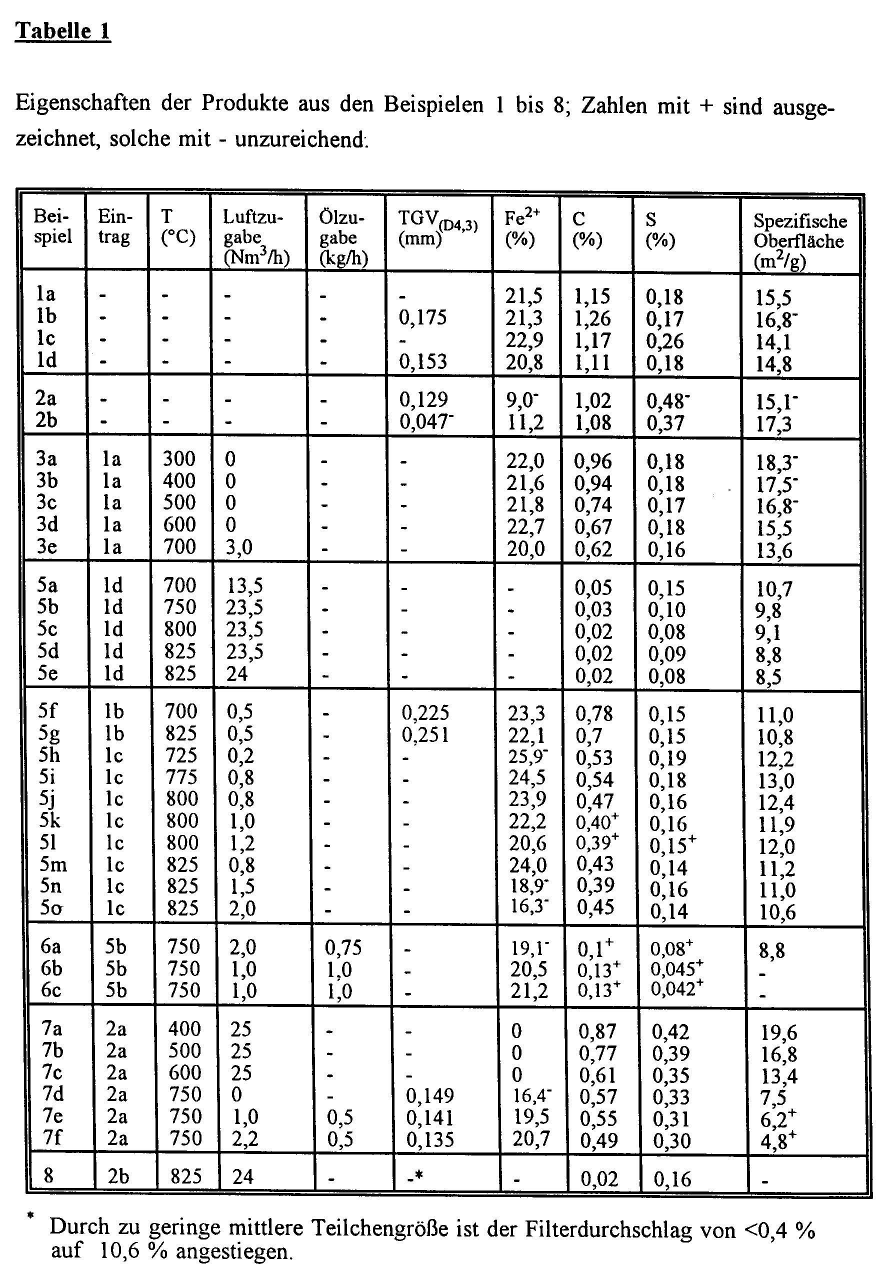

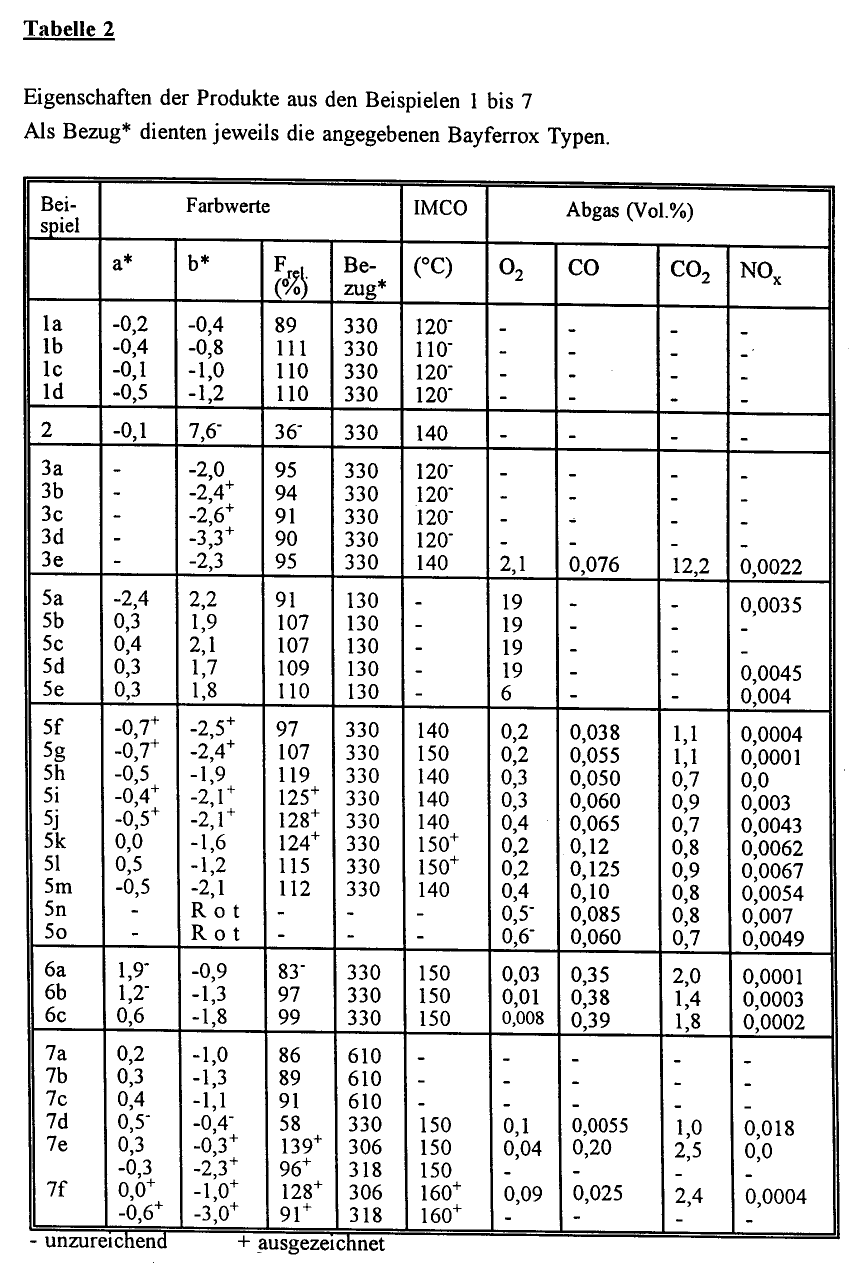

**Tabelle 3**

| Teilchengrößenverteilung des im Beispiel 4 eingesetzten Pigmentagglomerates | | | | | | |
|---|---|---|---|---|---|---|
| Fraktion (µm): | >355 | 250-355 | 200-250 | 100-200 | <100 | Σ |
| 1. Messung (Gew.-%): | 13,2 | 30,6 | 17,9 | 27,6 | 9,2 | 98,5 |
| 2. Messung (Gew.-%): | 12,9 | 28,3 | 18,2 | 28,8 | 9,7 | 98,9 |

## Patentansprüche

1. Verfahren zur Herstellung von Eisenoxidpigmenten aus der Gruppe (alpha-, gamma-) Fe₂O₃ und Fe₃O₄ aus entsprechenden Ausgangssuspensionen, deren Primärteilchen einen mittleren Durchmesser von ≤ 10 µm aufweisen und die durch
a) Umsetzung von Eisensalzlösungen mit alkalischen Verbindungen und Oxidation (Fällverfahren),
b) Oxidation von metallischem Eisen mit sauerstoffhaltigen Verbindungen (Pennimanverfahren),
c) Oxidation mit Nitrobenzol (Nitrobenzolreduktionsverfahren),
d) Abröstung von Eisensalzen (Coperasverfahren) mit nachfolgender Anmaischung in Wasser oder
e) Abtrennung und Aufarbeitung von im wesentlichen aus Eisen/Eisenverbindungen und Sauerstoff bestehenden Nebenprodukten oder Abfällen (Abwasserpasten) hergestellt werden,
gegebenenfalls Waschung und anschließender thermischer Behandlung, dadurch gekennzeichnet, daß das aus den Verfahren a) bis e) erhaltene Material ohne zusätzliche Bindemittel auf eine mittlere Teilchengröße von 0,05 bis 10 mm agglomeriert wird und anschließend dieses agglomerierte Material in einem beheizten Apparat thermisch behandelt wird, in dem das Material durch ein von unten nach oben gerichtetes Gasgemisch derart aufgewirbelt wird, daß eine Gas-Feststoff-Strömung gebildet wird, das gebildete Gas-Feststoff-Gemisch von unten nach oben durch den Apparat strömt und in einem zweiten, nachgeschalteten Apparat in Gas- und Feststoffkomponenten getrennt wird, wobei ein Teil des Feststoffstroms entnommen wird und das verbleibende Material wieder in den beheizten Apparat zurückgeführt wird.

2. Verfahren gemäß Anspruch 1, dadurch gekennzeichnet, daß ein Teil des abgetrennten Gasgemisches in den beheizten Apparat zurückgeführt wird.

3. Verfahren gemäß einem der Ansprüche 1 oder 2, dadurch gekennzeichnet, daß ein geeignetes Agglomerat durch Verdüsung oder Zerstäubung erzeugt wird.

4. Verfahren gemäß einem oder mehreren der Ansprüche 1 bis 2, dadurch gekennzeichnet, daß ein geeignetes Agglomerat über Aufbaugranulation unter Einsatz von Wasser oder über Kompaktierverfahren erzeugt wird.

5. Verfahren gemäß einem oder mehreren der Ansprüche 1 bis 4, dadurch gekennzeichnet, daß das aus den Verfahren erhaltene Material auf eine mittlere Teilchengröße von 0,1 bis 1 mm agglomeriert wird.

6. Verfahren gemäß einem oder mehreren der Ansprüche 1 bis 5, dadurch gekennzeichnet, daß das Gas-Feststoff-Verhältnis im beheizten Apparat auf 200 bis 1 300 Nm³/t Pigment eingestellt wird.

7. Verfahren gemäß einem oder mehreren der Ansprüche 1 bis 6, dadurch gekennzeichnet, daß die Gasgeschwindigkeit im beheizten Apparat auf zwischen 0,5 und 6 m/s eingestellt wird.

8. Verfahren gemäß einem oder mehreren der Ansprüche 1 bis 7, dadurch gekennzeichnet, daß die durchschnittliche Verweilzeit des Feststoffes im System zwischen 5 und 40 Minuten beträgt.

9. Verfahren gemäß einem oder mehreren der Ansprüche 1 bis 8, dadurch gekennzeichnet, daß die mittlere Mindestverweilzeit des Feststoffes im System mehr als 5 Minuten beträgt.

10. Verfahren gemäß einem oder mehreren der Ansprüche 1 bis 9, dadurch gekennzeichnet, daß zwei oder mehr beheizte Apparate in Reihe eingesetzt werden.

11. Verfahren gemäß einem oder mehreren der Ansprüche 1 bis 10, dadurch gekennzeichnet, daß der beheizte Apparat direkt oder indirekt mit geeignetem Brennstoff oder elektrisch beheizt wird.

12. Verfahren gemäß einem oder mehreren der Ansprüche 1 bis 11, dadurch gekennzeichnet, daß die thermische Behandlung unter oxidierenden Bedingungen erfolgt, wobei die Sauerstoffmenge im Abgas über 0,03 Mol Sauerstoff pro Mol durchgesetztem Eisen beträgt.

13. Verfahren gemäß Anspruch 12, dadurch gekennzeichnet, daß zur Herstellung eines Rotpigmentes die thermische Behandlung bei 700 bis 950°C durchgeführt wird.

14. Verfahren gemäß Anspruch 12, dadurch gekennzeichnet, daß zur Herstellung eines Braunpigmentes die thermische Behandlung bei 350 bis 600°C durchgeführt wird.

15. Verfahren gemäß einem oder mehreren der Ansprüche 1 bis 11, dadurch gekennzeichnet, daß die thermische Behandlung unter leicht oxidierenden, inerten oder reduzierenden Bedingungen durchgeführt wird, wobei die Sauerstoffmenge im Abgas zwischen 0,0001 und 0,026 Mol Sauerstoff pro Mol durchgesetztem Eisen beträgt.

16. Verfahren gemäß Anspruch 15, dadurch gekennzeichnet, daß als Reduktionsmittel flüssige oder gasförmige Kohlenwasserstoffe wie Öle oder Erdgas oder Steinkohle, Braunkohle, Aktivkohle oder Wasserstoff eingesetzt werden.

17. Verfahren gemäß einem der Ansprüche 15 oder 16, dadurch gekennzeichnet, daß die thermische Behandlung bei 350 bis 850°C durchgeführt wird.

18. Verfahren gemäß einem der Ansprüche 15 oder 16, dadurch gekennzeichnet, daß die thermische Behandlung bei 600 bis 850°C durchgeführt wird.

19. Verfahren gemäß einem oder mehreren der Ansprüche 12 bis 18, dadurch gekennzeichnet, daß als Oxidationsmittel sauerstoffhaltige Gase eingesetzt werden.

20. Verfahren zur Einfärbung von anorganischen oder organischen Dispersionen oder Baustoffen mit Eisenoxidpigmenten, dadurch gekennzeichnet, daß Eisenoxidpigmente, die nach einem Verfahren gemäß den Ansprüchen 1 bis 19 hergestellt wurden, eingesetzt werden.

21. Verfahren zur Einfärbung von anorganischen oder organischen Dispersionen oder Baustoffen mit Eisenoxidpigmenten, dadurch gekennzeichnet, daß Eisenoxidpgimente, die nach einem Verfahren gemäß den Ansprüchen 1 bis 19 hergestellt wurden, zuerst gemahlen und danach eingesetzt werden.

## Claims

1. Process for the production of iron oxide pigments from the group comprising (alpha-, gamma-) Fe₂O₃ and Fe₃O₄ from corresponding starting suspensions, the primary particles of which have an average diameter of ≤ 10 µm and which are produced by
a) reaction of iron salt solutions with alkaline compounds and oxidation (precipitation process)
b) oxidation of metallic iron with compounds containing oxygen (Penniman process),
c) oxidation with nitrobenzene (nitrobenzene reduction process)
d) roasting iron salts (copperas process) with subsequent preparation of a suspension in water or
e) separation and working up of by-products or wastes (effluent paste) substantially consisting of iron/iron compounds and oxygen
optionally washing and subsequent thermal treatment, characterised in that the material obtained from processes a) to e) is agglomerated without an additional binder to an average particle size of 0.05 to 10 mm and thermal treatment of this agglomerated material then proceeds in a heated apparatus in which the material is fluidised by an upwardly directed gas mixture in such a manner that a gas/solid flow is formed, the resultant gas/solid mixture flows from the bottom upwards through the apparatus and is separated into gas and solid components in a second, down-stream apparatus, wherein a proportion of the solid stream is discharged and the remaining material is returned to the heated apparatus.

2. Process according to claim 1, characterised in that a proportion of the separated gas mixture is returned to the heated apparatus.

3. Process according to one of claims 1 or 2, characterised in that a suitable agglomerate is produced by spraying or atomisation.

4. Process according to one or more of claims 1 to 2, characterised in that a suitable agglomerate is produced by agglomeration using water or by compaction processes.

5. Process according to one or more of claims 1 to 4, characterised in that the material obtained from the process is agglomerated to an average particle size of 0.1 to 1 mm.

6. Process according to one or more of claims 1 to 5, characterised in that the gas/solid ratio in the heated apparatus is adjusted to 200 to 1,300 Nm³/t of pigment.

7. Process according to one or more of claims 1 to 6, characterised in that the gas velocity in the heated apparatus is adjusted to between 0.5 and 6 m/s.

8. Process according to one or more of claims 1 to 7, characterised in that the average residence time of the solid in the system is between 5 and 40 minutes.

9. Process according to one or more of claims 1 to 8, characterised in that the average minimum residence time of the solid in the system is more than 5 minutes.

10. Process according to one or more of claims 1 to 9, characterised in that two or more heated apparatuses are used in series.

11. Process according to one or more of claims 1 to 10, characterised in that the heated apparatus is heated directly or indirectly with a suitable fuel or electrically.

12. Process according to one or more of claims 1 to 11, characterised in that thermal treatment proceeds under oxidising conditions, wherein the quantity of oxygen in the exhaust gas is above 0.03 mol of oxygen per mol of iron processed.

13. Process according to claim 12, characterised in that, for production of a red pigment, thermal treatment is performed at 700 to 950°C.

14. Process according to claim 12, characterised in that, for production of a brown pigment, thermal treatment is performed at 350 to 600°C.

15. Process according to one or more of claims 1 to 11, characterised in that thermal treatment is performed under slightly oxidising, inert or reducing conditions, wherein the quantity of oxygen in the exhaust gas is between 0.0001 and 0.026 mol of oxygen per mol of iron processed.

16. Process according to claim 15, characterised in that liquid or gaseous hydrocarbons, such as oils or natural gas or hard coal, lignite, activated carbon or hydrogen, are used as the reducing agent.

17. Process according to one of claims 15 or 16, characterised in that thermal treatment is performed at 350 to 850°C.

18. Process according to one of claims 15 or 16, characterised in that thermal treatment is performed at 600 to 850°C.

19. Process according to one or more of claims 12 to 18, characterised in that gases containing oxygen are used as the oxidising agent.

20. Process for colouring inorganic or organic dispersions or building materials with iron oxide pigments, characterised in that iron oxide pigments produced using a process according to claims 1 to 19 are used.

21. Process for colouring inorganic or organic dispersions or building materials with iron oxide pigments, characterised in that iron oxide pigments produced using a process according to claims 1 to 19 are first ground and then used.

## Revendications

1. Procédé de préparation d'oxydes de fer pigmentaires du groupe (alpha-, gamma-) Fe₂O₃ et Fe₃O₄ à partir de suspensions de matières premières appropriées dont les particules primaires ont un diamètre moyen ≤ 10 µm et qui ont été obtenues
a) par réaction de solutions de sels de fer avec des composés alcalins et oxydation (procédé par précipitation),
b) par oxydation du fer métallique à l'aide de composés oxygénés (procédé Penniman),
c) par oxydation à l'aide du nitrobenzène (procédé par réduction du nitrobenzène),
d) par grillage de sels de fer (procédé Coperas), suivi d'un empâtage dans l'eau, ou bien
e) par séparation et traitement de sous-produits ou déchets (pâtes d'eaux résiduaires) consistant essentiellement en fer/composés du fer et oxygène,
avec le cas échéant lavage et traitement thermique subséquent,
caractérisé en ce que l'on agglomère la matière obtenue par les procédés a à e, sans adjonction d'un liant, jusqu'à une dimension de particule moyenne de 0,05 à 10 mm et on soumet ensuite cette matière agglomérée à traitement thermique dans un appareil chauffé dans lequel la matière est mise en mouvement tourbillonnaire par un mélange gazeux dirigé de bas en haut avec formation d'un courant de gaz-matière solide, lequel s'écoule de bas en haut dans l'appareil et est séparé dans un deuxième appareil placé à la suite en composants gazeux et composants solides, une partie du courant de matière solide étant prélevée et la matière restante recyclée dans l'appareil chauffé.

2. Procédé selon la revendication 1, caractérisé en ce qu'une partie du mélange gazeux séparé est recyclée dans l'appareil chauffé.

3. Procédé selon une des revendications 1 ou 2, caractérisé en ce que l'on forme des agglomérats appropriés par pulvérisation ou atomisation.

4. Procédé selon une ou plusieurs des revendications 1 à 2, caractérisé en ce que l'on forme des agglomérats appropriés par granulation avec accumulation avec adjonction d'eau ou par des techniques de compression.

5. Procédé selon une ou plusieurs des revendications 1 à 4, caractérisé en ce que la matière obtenue par les procédés indiqués est agglomérée jusqu'à une dimension de particule moyenne de 0,01 à 1 mm.

6. Procédé selon une ou plusieurs des revendications 1 à 5, caractérisé en ce que, dans l'appareil chauffé, on règle le rapport gaz/matière solide à un niveau de 200 à 1 300 m³ normaux par tonne de pigment.

7. Procédé selon une ou plusieurs des revendications 1 à 6, caractérisé en ce que l'on règle la vitesse des gaz dans l'appareil chauffé entre 0,5 et 6 m/sec.

8. Procédé selon une ou plusieurs des revendications 1 à 7, caractérisé en ce que la durée de passage moyenne de la matière solide dans le système est comprise entre 5 et 40 min.

9. Procédé selon une ou plusieurs des revendications 1 à 8, caractérisé en ce que la durée de passage minimale moyenne de la matière solide dans le système est supérieure à 5 min.

10. Procédé selon une ou plusieurs des revendications 1 à 9, caractérisé en ce que l'on exploite deux ou plusieurs appareils chauffés en série.

11. Procédé selon une ou plusieurs des revendications 1 à 10, caractérisé en ce que l'appareil chauffé est chauffé par chauffage direct ou indirect à l'aide d'un combustible approprié ou par chauffage électrique.

12. Procédé selon une ou plusieurs des revendications 1 à 11, caractérisé en ce que le traitement thermique est réalisé en milieu oxydant, la quantité d'oxygène dans les gaz résiduaires étant supérieure à 0,03 mol d'oxygène par mol de fer traité.

13. Procédé selon la revendication 12, caractérisé en ce que, pour la préparation d'un pigment rouge, on procède à un traitement thermique à des températures de 700 à 950°C.

14. Procédé selon la revendication 12, caractérisé en ce que, pour la préparation d'un pigment brun, on procède à un traitement thermique à des températures de 350 à 600°C.

15. Procédé selon une ou plusieurs des revendications 1 à 11, caractérisé en ce que le traitement thermique est réalisé en milieu légèrement oxydant, inerte ou réducteur, la quantité d'oxygène dans les gaz résiduaires allant de 0,001 à 0,026 mol d'oxygène par mol de fer traité.

16. Procédé selon la revendication 15, caractérisé en ce que l'on utilise en tant qu'agents réducteurs des hydrocarbures liquides ou gazeux tels que des huiles ou du gaz naturel ou de la houille, du lignite, du charbon actif ou de l'hydrogène.

17. Procédé selon l'une des revendications 15 ou 16, caractérisé en ce que le traitement thermique est réalisé à des températures de 350 à 850°C.

18. Procédé selon l'une des revendications 15 ou 16, caractérisé en ce que le traitement thermique est réalisé à des températures de 600 à 850°C.

19. Procédé selon une ou plusieurs des revendications 12 à 18, caractérisé en ce que l'on utilise en tant qu'agents oxydants des gaz qui contiennent de l'oxygène.

20. Procédé pour colorer des dispersions minérales ou organiques ou des matériaux de construction par des oxydes de fer pigmentaires, caractérisé en ce que l'on utilise des oxydes de fer pigmentaires préparés par un procédé selon les revendications 1 à 19.

21. Procédé pour colorer des dispersions minérales ou organiques ou des matériaux de construction par des oxydes de fer pigmentaires, caractérisé en ce que l'on utilise des oxydes de fer pigmentaires préparés par un procédé selon les revendications 1 à 19 mais broyés au préalable.
